# EUROPEAN PATENT SPECIFICATION

(11) **EP 0 385 975 B1**
(45) Date of publication and mention of the grant of the patent: **09.03.1994**
(21) Application number: 87907863.2
(22) Date of filing: 26.10.1987
(51) Int. Cl.: B21D 39/02

(54) **AIR CARGO CONTAINER AND METHOD FOR FORMING SIDE PANELS THEREOF**
LUFTSPEDITIONSBEHÄLTER UND DESSEN SEITENPANEELE
CONTENEUR DE FRET AERIEN, ET PROCEDE DE REALISATION DE SES PANNEAUX LATERAUX

(43) Date of publication of application: 12.09.1990
(73) Proprietor: CENTURY AERO PRODUCTS INERNATIONAL INC., Compton, CA 90221 (US)
(72) Inventor: DUNWOODIE, Edward, H., Long Beach,California 90815 (US)
(74) Representative: Klunker . Schmitt-Nilson . Hirsch
(86) International application number: US8702724
(87) International publication number: WO8903733

(56) References cited:
- DE-A- 2 927 587
- GB-A- 1 217 732
- US-A- 2 294 324
- US-A- 2 505 241
- US-A- 2 523 760
- US-A- 2 904 144
- US-A- 3 024 496
- US-A- 3 462 989
- US-A- 3 468 577
- US-A- 4 059 880
- US-A- 4 553 890
- US-A- 4 676 729
- H. SAECHTLING: "Plastics Handbook", 1983, page 217, MacMillan Publishing Co.,Inc., New York, US

## Description

1. This application relates to an improved air cargo container and enabling method and means for the construction thereof. Also it pertains to an air cargo container corner construction which facilitates advantage in formation for assembly and disassembly of highly desired transparent and tough polycarbonate panels, in that it allows them for the first time to be used effectively in air cargo containers.

2. Brief Description of the Prior Art. Prior art containers and container structures have provided containers of rigid and sturdy construction to safeguard cargo items being transported or stored therein. However, the side panels of the previous containers have been attached to the container frame most often using a bolt that passed through the panel. This made the use of a polycarbonate panel undesirable because of stress crazing and cracking that occurred around the bolt holes through which the bolt passed when attaching the panel. Additionally, the attempted use of nuts and bolts, rivets, fixings or the like to attach the side panel necessitated much effort to replace any side panel, in that removing the panel required disassembly of the nut and bolt combination. Special tools were often needed and the individual nuts and bolts were lost, especially under operating conditions for loading cargo containers into airplanes, i.e., urgency and sometimes poor illumination. Additionally, the commonly used panel material, aluminum, is not transparent. Thus the cargo handlers cannot see how or to what extent the cargo container is loaded. The lack of tranparency of prior panels also hid undesired acts of pilferage from plain view.

US-A-2 905 144 discloses a joint construction for wall panels of containers whereby adjacent edge portions are retained in a pair of clamping bars extending along the edges. The panels are shaped into corrogations whereby said corrogations are nested in complementary formed notches of the clamping bars. The clamping bars are secured together by means of threaded bolts. Such bolts tend to loosen in time especially when the container is exposed to temperature changes occuring for instance when transported by cargo-planes.

DE-A-29 27 587 discloses a container construction where the edges of panels are clamped between an inner and an outer corner molding strip. The panels are only secured by frictional forces. In order to avoid that the panels slip through the clamped strips the ends of the panels are folded so that they are retained, should there be a lateral displacement.

The reliability of the known construction depends exclusively from the nuts and bolts connection. It is very likely and must be expected that the bolts get loose especially in heavy-duty applications.

### OBJECTS AND SUMMARY OF THE INVENTION

An object of the present invention is to disclose a container using an interlocking corner joint that is of great strength, usually repairable in the field using the minimum of labor, tools or specialized training, and is capable of receiving a transparent polycarbonate plastic panel formed by a herein disclosed method for shape-forming the edges of the panel.

Another object of the invention is to disclose a method for shape-forming the edges of a polycarbonate plastic panel into matching corrugations such that it internests with corrugations of the disclosed corner joint edges.

In an exemplary embodiment of the invention a method for manufacturing a cargo container is disclosed in claim 9.

A container constructed according to claim 1 provides long sought solutions to the above problems with a maximum of strength and a minimum of weight. By eliminating any need to pass a bolt through the polycarbonate panel, stress crazing of the panel has been eliminated. The interaction of the inventive corner molding joint with the herein disclosed method for shape-forming the edges of a polycarbonate plastic panel allow the use of polycarbonate panels in air cargo containers. The resulting corner molding joint also has the advantage of allowing quick and easy replacement of damaged side panels through the use of preferably an integral jack-bolt mechanism for engaging and disengaging strongly mated and fixed parts of the corner joint. The jack-bolt mechanism coupled with toughness and transparency of the polycarbonate panels also allows easy repair in adverse conditions, requiring no more than a power screwdriver. Furthermore, the new and improved assembly prevents the loss of any parts needed to reassemble the air cargo container when a damaged panel needs replacement.

### BRIEF DESCRIPTION OF THE DRAWINGS

Having thus described the invention in general terms, reference will now be made to the accompanying drawings in which:
FIG. 1 is an enlarged cross-sectional view of the corner of an air cargo container.
FIG. 2 is the same corner joint of the air cargo container shown in a disengagement mode.
FIG. 3 is the same corner joint as shown in FIG. 1 with the upper nut removed to better illustrate details of the invention.
FIG. 4 is a horizontal elevation of the shaping apparatus.
FIG. 5 is a partially cut away vertical elevation of the apparatus.
FIG. 6 is a partial horizontal cross-section of the shaping apparatus taken along line 6-6 shown in FIG. 4.
FIG. 7 is a partial horizontal cross-section of the shaping apparatus taken along line 7-7 in FIG. 4.
FIG. 8 is a partial horizontal cross-section of the shaping apparatus taken along line 8-8 in FIG. 4.
Figure 9 is a perspective view of a container constructed in accordance with the invention.

### DETAILED DESCRIPTION OF THE PREFERRED EMBODIMENT

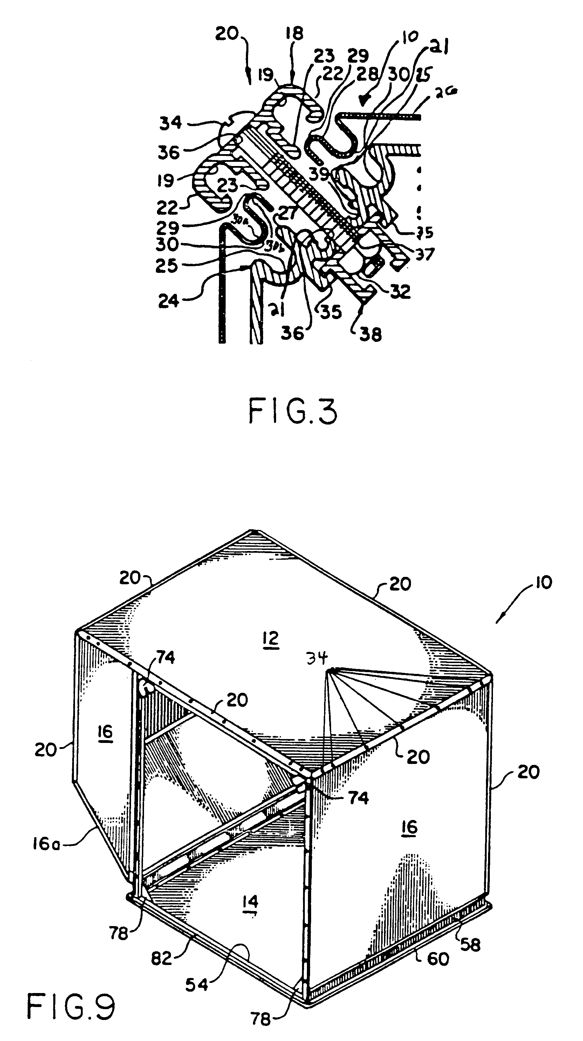

Referring to the drawings, like numbers of reference indicate like elements throughout. In FIG. 3, peripheral corner 20 of container 10 is constructed with an outer corner panel strip 18 having flanged edges 22 adapted to mate lengthwise with an inner corner molding strip 24 and retaining side panel skins 26 thereinbetween to form the peripheral corner 20 of container 10.

An outer panel skin 26 forms a side of container 10. Peripheral edges 28 of outer panel skin 26 are adapted to be inserted and releasably retained between outer channel strip 18 and inner molding strip 24.

The corrugated configuration of the peripheral edges 28 of the outer panel skin 26 is formed by rolling parallel ridges 29 and 30 (including corresponding grooves 30a and 30b) around the four edges of each panel. The ridges are retained within corresponding longitudinal grooves 25 and 19, in the inner and outer molding strips 24 and 18, respectively. A projecting lip 27 of the inner molding strip 24 mates with ridge 29 and forces it into a groove 19 of the outer channel strip 18. Simultaneously, the flanged edges 22 of the outer channel strip 18 mate with the ridge 30 of the two side panel skins 26 and force them into opposite grooves 25 of the inner corner molding 24. Projecting lips 23 on the underside of the outer channel 18 mate with preferably semicircular grooves 39 on the inner molding 24 and give the joint integral strength when the two moldings are clamped together. Thus, when threadably tightened, a bolt and nut combination 34 and 32 will compress and retain in a releasable lengthwise relation, the corrugated peripheral edges 28 of the outer panel skins 26 inserted between the inner and outer corner molding strips 24 and 18 to form the structural corner 20 of the container 10.

The bolt 34 is inserted through aligned holes 36 in the inner and outer corner molding strips 24 and 18 and hole 37 in a short channel piece 38. The nut 32 is held rotationally immobile in the channel 38 which is slidably inserted in the inner corner molding strip 24 and therein held in place by channel-like extensions 35 protruding from the inner side of molding strip 24. The nut holding channel 38 is therein retained by inwardly protruding lips.

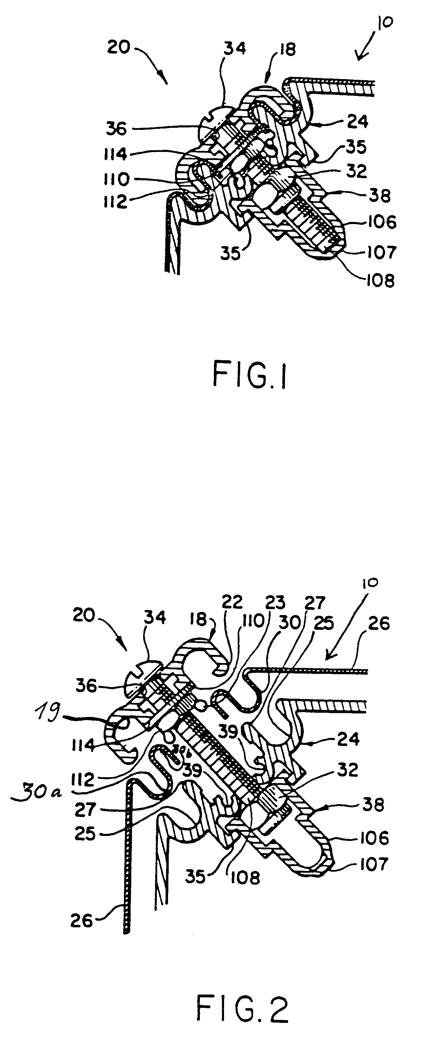

Thus, as best shown in FIG. 2, in the replacement of damaged outer panel skins 26, the component parts comprising the structural corner 20 are not totally dismantled and the bolts and nuts 34 and 32 remain engaged in the channel molding strip 18 and inner molding strip 24, thus preventing their separation and loss.

The configuration of channel 38 shown in FIG. 3 is modified by the addition of an integrally formed U-shaped extrusion 106, as shown in FIGS. 1 and 2. In this embodiment, the projecting end 108 of the bolt 34, when tightened in nut 32, is protectively encapsulated by channel 38 with its U-shaped extrusion 106, thus preventing damage to the extended end of bolt 34 or the thread thereon and also the cargo stored within the container. When the bolt 34 is tightened during the assembly of the peripheral corner 20 of the container 10, its length is such as to cause a dimple 107 in the U-shaped portion 106 of the channel 38. Thus, the mating of the bolt end 108 and dimple 107 prevents the channel 38 from sliding from its position encompassing the nut 32, especially on the vertical corners. When the bolt 34 is rotatably retracted to the position shown in FIG. 2, its end 108 remains threadably engaged with the nut 32. This retracted position permits the disengagement of the outer skin 26 which was retained between the outer molding strip 18 and the inner molding strip 24. Thus, the component parts comprising the peripheral corner 20 are not totally dismantled during the attachment and/or replacement of the outer skin panel 26.

In the second preferred embodiment as shown in FIGS. 1 and 2, it should be noted that a washer 110 and supporting nut 112 are threadably mounted on bolt 34 in a counterbored recess 114 in the underside of the molding strip 18. The self-locking nut 112, commercially known as a "nyloc-nut", has a nylon insert which clinches the nut onto the threads of the bolt 34 in a relative position allowing a clearance space between the washer 110 and molding strip 18, thus permitting the bolt to rotate in the hole 36 and in the outer molding strip 18. Thus, when the bolt 34 is rotatably retracted to its outer position as shown in FIG. 2, the washer 110 and nut 112 rotate with the bolt and remain in their relative position affixed upon the bolt 34. The nut being held rotationally immobile in the channel 38 unscrews from the bolt 34, thus forcing the outer molding strip 18 to disengage from its locking position with inner molding 24 and, thereby, releasing outer skin 26.

Referring now to FIG. 9, the invention is shown embodied in the form of a cargo container 10, specifically, an air cargo container. The container comprises a top 12, a bottom 14, and a plurality of exterior side walls 16. The actual exterior shape of the container 10 can be contoured to occupy a particular location as, for example, against the curved hull of a cargo aircraft or a seagoing vessel, by the addition of angled and/or shortened walls 16a. Through access opening 54 can be seen hinged handles 74, gusset plates 78 and threshold channel 82 to which a flexible door flap (not shown) may be attached and secured. The peripheral corner 20 of the container 10 has bolts 34 accessible from the surface and penetrating the corner thereof, as shown in FIGS. 1 - 3. The lower panel portions 58 of the side walls 16 are reinforced with peripheral hollow stiffener members 60 forming a structural frame around the bottom 14.

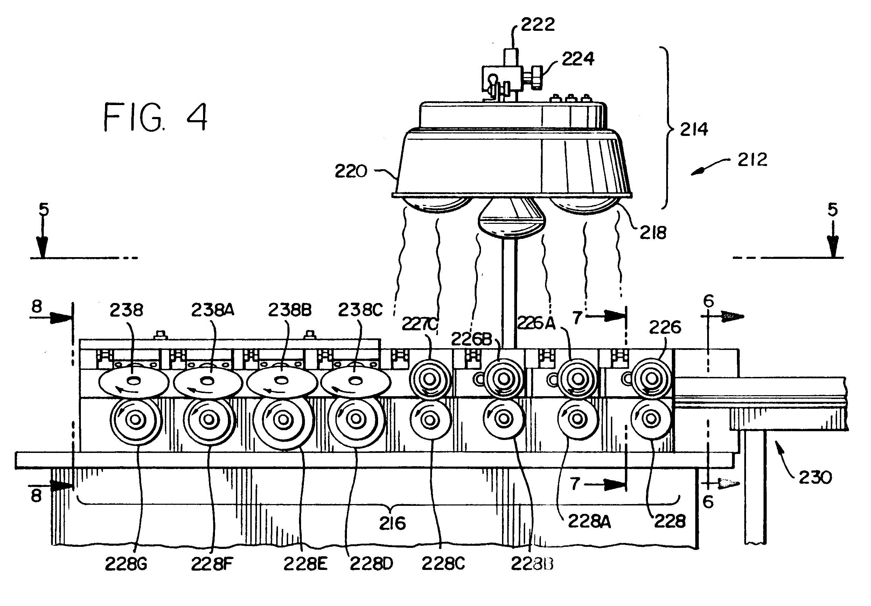

Referring now to FIG. 4, which is a horizontal elevation of apparatus 212, the apparatus 212 can be composed of two sections, the heating means 214 and shaping means 216. The heating means 214 is composed of one or more heating lamps 218 enclosed as in a shroud 220. This shroud 220 can be mounted on a pole 222 by clamp 224. Clamp 224 can be loosened and the heating means 214 adjusted up and down. This allows the distance between the heating means 214 and the shaping means 216 to be varied.

The lamps 218 can be such as infra-red heat lamps. Typically, these heating lamps draw 250 watts of electric current. For example, a collection of 7 heating lamps, can raise the temperature of a metal part up to around 110°F (49°C) approximately when positioned 14 inches away.

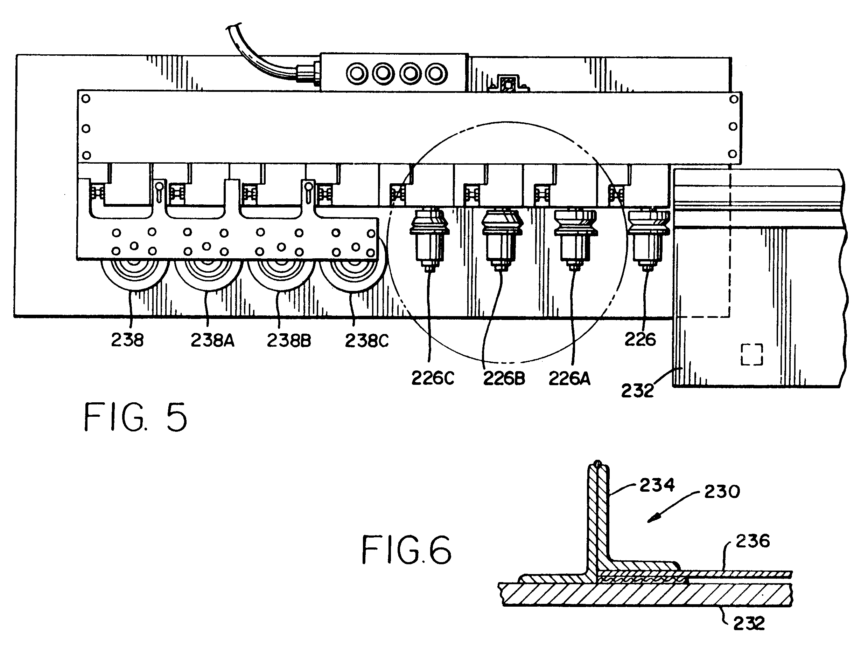

The shaping means 216 is composed of a series of opposed roller dies 226 and 228, wherein roller die 226 is disposed on top of roller die 228. Although FIG. 4 shows eight such pairs of roller dies 226 - 226G and 228 - 228G, the number of opposed roller die pairs can be varied depending upon the geometry desired in the final edge of the plastic sheet to be shape-formed. The roller dies 226 and 228 rotate in the same direction, i.e., from right to left. Positioning means 230, shown in FIG. 6, allows the sheets to be introduced into the series of opposed roller dies. The sheet 236 travels from right to left in FIG. 4 encountering the roller die pairs in alphabetical order after roller die pairs 226 and 228. When the sheet 236 encounters the roller die pairs, and afterwards, the roller dies with the third roller dies 238 - 238C, the sheet edge is progressively shaped into the corrugations for inter-nesting with a channel defined by the edges of the corner molding strips.The roller dies 226 - 226G and 228 - 228G are powered by electric motors.

FIG. 5 is a vertical elevation of apparatus 212. Heating shroud 220 is shown in phantom to show its position in relation to the top roller die 226. Alternatively, the heating assembly could be configured to heat all the top roller dies or even all the roller dies, bottom and top. As seen in FIG. 6, positioning means 230 is composed of a horizontal table 232 with a guide 234 composed of angle iron mounted above the table 232. The angle iron of guide 234 is mounted sufficiently far above the table 232 to allow a sheet of plastic material to slide along felt webbing placed on top of the table 232. The positioning means 230 guides the sheets of thermoplastic material into the series of opposed roller dies 226 - 226G and 228 - 228G.

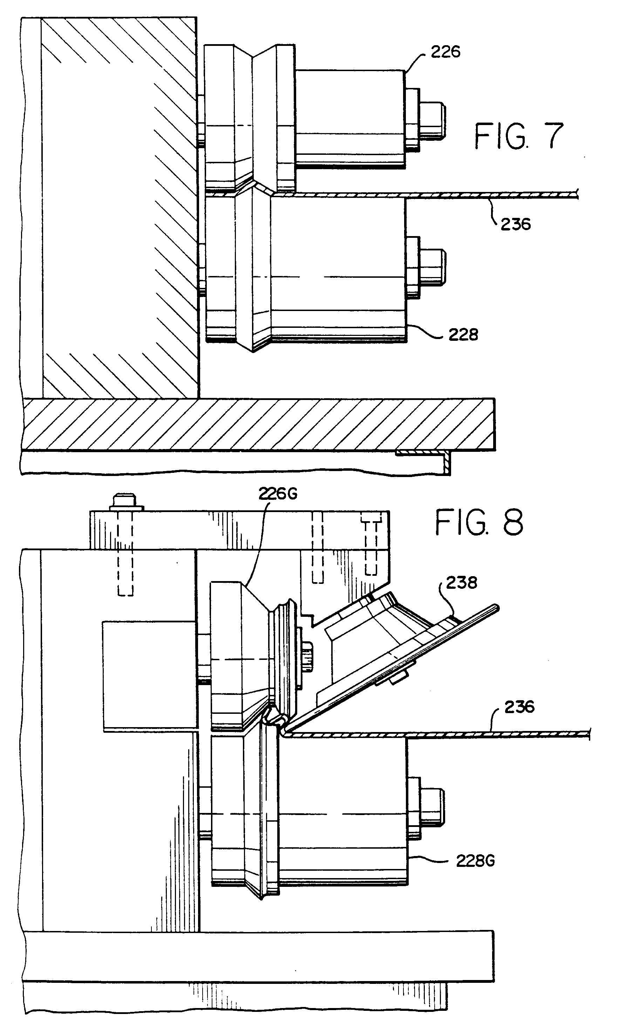

FIG. 7, which is a partial horizontal cross-section of the apparatus 212, shows a sheet 236 of thermoplastic material going through the first pair of roller dies 226 and 228. The roller dies are deforming the thermoplastic material sheet 236 as shown.

FIG. 8, which is a partial horizontal cross-section taken along lines 8-8 in FIG. 4, shows the thermoplastic material sheet 236 as it emerges from the last set of roller dies 226 and 228. Also impinging upon the thermoplastic sheet 236 is a third roller die 238, the last in a series of third roller dies 238 - 238C. As can be seen, the set of three roller dies 226G, 228G and 238 are beyond the range of heating means 214. However, due to the pre-heating of the panel and the heating of the first series of roller dies, the thermoplastic material is still amenable to shaping. Also illustrated in FIG. 8 is the complex shape with the minimal radius of curvature for the ridges formed in the edge of sheet 236.

The apparatus and method of the present invention maintains enough heat in the edge of the sheet 236 of plastic material so that the edge may be shaped into the desired geometry by the series of roller dies 226 - 226G, 228 - 228G and, if needed, 238 - 238C. The heat is transferred into the sheet 236 by first heating the panel separately to 120°F before putting the sheet into the apparatus. The top roller die 226 is heated, in turn, by the heating means 214. The heat transfer from the roller die 226 to the sheet 236 is accomplished by direct contact and is to maintain the sheet temperature near 120°F. The heat transfer from the heating means 214 to the top roller die 226 is accomplished by radiation heating where heat lamps 218 are used. In the case of infra-red heat lamps, in an assembly of 7 heat lamps together, the temperature of the top roller die 226 reaches 110°F (49°C). This is sufficient to maintain enough heat in the plastic sheet 236 to make it amenable to shaping by the roller die 226 and 228. Thus, the sheet 236 is pliable enough to be reshaped into the desired geometry.

One specific use of the apparatus and method for shaping the edges of thermoplastic material sheets is in manufacture of advanced air cargo containers. It is desirable that the side panels of air cargo containers be light, yet strong enough to withstand rough handling and other abuses. Polycarbonate material, such as polycarbonate produced by General Electric Company, meets this requirement. In one specific type of air cargo container, the geometry required for the edges of the side panel skins consists of a series of corrugations. The radius of curvature is typically the thickness of the sheet material. In the case of polycarbonate, cold forming techniques are not recommended where the radius of curvature is less than 100 times the thickness of the sheet material. If the radius of curvature is less, stress crazing can result.

In particular, it has been found that a collection of infra-red heat lamps, positioned in a shroud assembly about 14 inches from the top roller die, was sufficient to raise the temperature of the top roller die to 110°F (49°C). In particular, when a sheet of 1/16th inch thick of polycarbonate is introduced into the shaping means containing the roller dies, above which the heating assembly described hereinbefore is mounted 14 inches away from the initial top roller dies, the complicated geometry required for side panels of air cargo containers can be shaped-formed into the edges of the sheet.

A most important feature of this invention is the joint as used with the particular polycarbonite material. The joint is a continuous joint so that every piece of the joint is providing strength. When there is a riveted or bolted or any mechanical joint, the strength is provided by the rivet, and if the rivets are at half-inch, one inch, two inch, or whatever pitch that they are, the strength is only provided at those points and pitches. If high strength is desired, a very high number of fixings, rivets, bolts, or whatever have to be employed. For the present container with the polycarbonate panel, tests have shown that loads of 500 lbs. per inch were obtained. The area of the joint or the linear length of the joint on top of the present container is 160 inches plus 120 inches which gives approximately 280 inches and, at 500 lbs. per inch, it gives the staggering load of approximately 150,000 lbs. Without use of the herein described joint, it would need probably a treble line of rivets every half inch to approach the load which is obtained from this joint. The cost of doing that would be prohibitive. The added weight would be prohibitive. The maintenance costs would be prohibitive. With the present design, one man with a power screwdriver can remove or replace a panel in five minutes. Thus, a massively high level of strength equal to the tensile strength of these polycarbonate sheets is achieved, coupled with ease of assembly and disassembly are achieved.

Another feature of this design is that the joint creates its own hollow section which provides greater stiffness of the frame. In either of these materials, aluminum or polycarbonate, the container structure produces a diaphragm effect as with drums where the skin of the drum is in tension against a strong outside periphery. There is still flexibility so that, when it receives a blow, it absorbs a tremendous amount of energy before breaking. The strong frame is achieved by way of the extrusions (inner and outer corner molding strips) which are made stronger because the clamping extrusion forms a hollow section as two independent clamping extrusions come together to form a hollow extrusion, which means that the stiffness of the frame is very much greater than it would otherwise be.

The joint that has been disclosed herein enables polycarbonate panels to be used. Polycarbonate has been around for many years, but it has never been able to be used in this application, because the only way of fixing it to any box is by way of fixing it by rivets, or whatever, which would inevitably fail due to stress corrosion. As noted, there are no holes in the instant design; therefore, the disclosed joints make polycarbonate useable and it cannot be used without this type of joint. Referring to FIG. 3, the important factors are the two inner legs of the capping extrusion which have small beads 23. The small beads fit into the recesses marked 39 on the structural extrusion by driving past rims 21 which go back to the position shown in FIG. 3 once the beads have passed by. When these two beads are connected and home, the two extrusions become one integral extrusion. The force required to make them and to disengage them is very, very significant.

The jackbolt, which is item 108 (FIG. 3), is the means of forceably removing the capping extrusion (outer corner molding strip) from the structural extrusion (outer corner molding strip). When these two legs 23 are connected to the structural extrusion, the capping is fixed and the fixing joint, which is shown on the panel, is sufficient to prevent the panel from coming out. It should be noted that the grooves are deep. It therefore means that if the snap-fit is to pull out, the leg 23 must bend. And when the leg bends, it comes into the side and the more it comes into the side the more it jams. The same effect is experienced on the inside area about the number 39. So this becomes absolutely fixed because the two legs are fixed in the center at 23, 39.

The bolts 34 themselves are not necessary from a structural point of view. The bolts enable the capping to be put on and taken off. It therefore, in effect, produces a joint which requires no bolt for the purpose of the joint. Now what happens is after pressure is put on by the bolt, those two middle legs 23 bend inwards and as they get past the cam-like detent, they spring back (as little as .020"), which makes a firm snap and a permanent connection between the capping and structural extrusions until forced apart, as noted by the jackbolt 108 (Fig. 3).

The outside capping leg fits into a U-section. The gap in that U-section is designed to be no more than 1/16th of an inch. The polycarbonate panel is 1/16th of an inch throughout (including its formed edges). The more load that goes on the panel the more it tends to try to pull that leg upwards, which causes it to cram or jam into the side of the panel and into the adjacent leg of the structural extrusion. The panel is jammed between the two extrusions, i.e., a load being put on the panel is going to try to pull the leg outwards and the more it tries to pull it outward the more it crams into the structured extrusion, jamming the panel between the structured extrusion and the capping extrusion. That action tightens it. The more load that goes on, the tighter it gets -- importantly and uniformly all along the extrusions.

If just the bolts were holding the part in position, say at three foot spacing, and a very severe load is put in the middle of the three foot spacing, there would be a tendency then for the capping extrusion to bend and bow outwardly between the bolts, which would tend not to allow the frame to work as it has been designed. Instead of coming up into and against the structured extrusion, it would tend to lift and pull out.

Because it has a second outer leg, that second leg 18 goes into the structured extrusion and jams into the structured extrusion -- which makes it impossible for that to happen. Once the extrusion is locked it can't come out. The panel is stuck between the extrusions when, effectively, two have become one homogenous whole -- a perfect joint around and clamping uninterruptedly the thus formed edges of the polycarbonate diaphragm. When those two legs in the middle engage, it becomes homogenous -- two are made into one. The two extrusions have the same structural value as one extrusion.

## Claims

1. A cargo container whose construction comprises: an inner and an outer corner molding strip (18, 24) adapted to mate continuously lengthwise, sharing between them an uninterrupted lip and groove combination (19, 25,22, 27) for snap fitting said molding strips (18, 24) together, said molding strips (18, 24) shaped into internesting corrugations at their edges; and
panels (26) shaped into corrugations (30) at the edges, the edges adapted to internest with said corrugations (19, 24, 22, 27) of said molding strips (18, 24), said panels (26) when internested with said molding strips (18, 24) at all edges of said panel being under tension; characterized in that attaching means (23, 39) are provided for snap-fitting said inner and outer corner molding strips (18, 24) together to confine the corrugated edges of said panels (26) and for selectively releasing said snap-fitting for replacing damaged panels or other parts.

2. A cargo container according to claim 1, whereby the outer corner molding strip (18) defines a longitudinally extending groove means (19) opening inwardly toward the container interior and including a longitudinally extending edge (22); and the inner corner molding strip (24) defines a longintudinally extending groove means (25) opening outwardly away from the container interior and including a longitudinally extending projecting lip (27) and a wall of the container comprises a continuous, unperforated semi-rigid panel (26) with peripheral edges being bent to form a S-profile (30) with a first groove opening outwardly away from the interior of the container and a second groove opening inwardly towards the interior of the container and with attaching means (23, 39) to releasably snap-fitting the outer molding strip (18) to the inner molding strip (24) such that the edge (22) of the outer corner molding strip (18) extends into the first groove of the panel (26) which extends with its convex side into the groove means (25) of the inner molding strip (24) and the lip (27) of the inner molding strip (24) extends into the second groove of the panel (26) which extends with its convex side into the groove means (19) of the outer corner molding strip (18) so as to clamp the peripheral edge of the semi-rigid panel (26) between the outer corner molding strip (18) and the inner molding strip (24) forming a double seal.

3. A cargo container according to claim 1 or 2, whereby the attaching means comprise beads (23) being part of the outer corner molding strip (18) and recesses (39) being part of the inner corner molding strip (24), said beads (23) and recesses (39) are forming a mating snap-tit connection providing the force to hold the inner and outer corner molding stripes (18, 24) firmly together.

4. A cargo container as claimed in claim 1 characterized in that the sheet plastic material of said wall panels is translucent.

5. A cargo container as claimed in any of the preceding claims characterized in that the sheet plastic material of said wall panels is formed from a polycarbonate plastic material.

6. A cargo container as claimed in any of the preceding claims wherein a nut retaining means (38) on the inner molding strip is provided and a nut means (32) non-rotatably retained in the nut retaining means, and threaded means (34) extending through the outer corner channel strip and the inner molding strip, but not penetrating the panel edge portion, said threaded means (34) threadingly engaging the nut means (32).

7. A cargo container as claimed in claim 6, wherein said threaded means comprises a bolt (34) that is mated with said nut (32) in such a way that said bolt never separates from said nut, said nut being positioned in relationship with said molding strip so that said bolt never disengages from said molding strips.

8. A cargo container as claimed in claim 7, including a threaded jack screw and mating captive nut for forcibly separating the snap-fit connection, the screw and nut associated respectively with the inner and outer corner molding strips.

9. A method of making a cargo container according to any of the preceding claims comprising:
shape-forming the edges of the transparent polycarbonate panels into at least one corrugation by preheating each panel edge and passing said preheated edge through one or more roller dies disposed so as to progressively form corrugations into each panel edge;
introducing each edge of said panels between an inner corner molding strip and an outer corner channel strip with the edge corrugation of the panel disposed between the inner corner molding strip (18) and the outer corner channel strip (20), said corrugation comprising a ridge (30) which is inserted into and seated within a groove means (25) of the inner corner molding strip;
placing a longitudinally extending edge (22) on each outer corner channel strip into the ridge (30) of the edge portion of the wall panel so that the outer corner channel strip is inserted into and seated within a groove means (25) of the inner corner molding strip;
characterized by pressing the inner and outer corner molding stripes (18, 24) together, attaching means (23, 29), providing a snap-fit connection come into engagement, so that the inner and outer corner molding stripes (18, 24) are firmly retained together and
attaching a door over an opening left without a side panel between peripheral edges of the container.

## Patentansprüche

1. Ein Fracht-Container, dessen Konstruktion aufweist:
einen inneren und einen äußeren Eckenformungs- oder Eckenfüllungs-Streifen (18, 24), welche dazu befähigt sind, kontinuierlich in der Längsrichtung zusammenzupassen, und welche zwischen sich an einer ununterbrochenen Lippen- und Nut-Kombination (19, 25, 22, 27) für eine Schnappzusammenpassung der genannten Formungsstreifen (18, 24) miteinander teilhaben, wobei die genannten Formungs-Streifen (18, 24) zu ineinander verschachtelbaren Riffelungen oder Wellungen an ihren Kanten geformt sind; und
Paneele (26), welche zu Wellungen oder Riffelungen (30) an ihren Kanten geformt sind, wobei die Kanten dazu befähigt sind, mit den genannten Riffelungen oder Wellungen (19, 24, 22, 27) der genannten Formungs-Streifen (18, 24) ineinandergeschachtelt zu werden, und wobei die genannten Paneele (26), wenn sie mit den genannten Formungs-Streifen (18, 24) an allen Kanten der genannten Paneele ineinandergeschachtelt sind, einer Spannung unterworfen sind;
**dadurch gekennzeichnet,**
daß Befestigungsmittel (23, 39) für die Schnappzusammenpassung der genannten inneren und äußeren Eckenformungsstreifen (18, 24) miteinander vorgesehen sind, um die geriffelten oder gewellten Kanten der genannten Paneele (26) einzuschließen, und zum selektiven Freigeben der genannten Schnappzusammenpassung zum Ersetzen von beschädigten Paneelen oder anderen Teilen.

2. Ein Fracht-Container gemäß Anspruch 1, bei welchem der äußere Eckenformungs-Streifen (18) eine sich in der Längsrichtung erstreckenden Nut (19) begrenzt, welche sich einwärts in Richtung zu dem Container-Inneren öffnet und eine sich in der Längsrichtung erstreckende Kante (22) umfaßt; und bei welchem der innere Eckenformungs-Streifen (24) eine sich in der Längsrichtung erstreckende Nut (25) begrenzt, welche sich auswärts weg von dem Container-Inneren öffnet und eine sich in der Längsrichtung erstreckende vorspringende Lippe (27) umfaßt, und wobei eine Wandung des Containers eine kontinuierliche, nicht perforierte halbsteife Paneele (26) mit Umfangskanten aufweist, welche gebogen sind, um ein S-Profil (30) zu bilden, welches eine erste Nut, die sich auswärts weg von dem Inneren des Containers öffnet, sowie eine zweite Nut aufweist, welche sich einwärts in Richtung zu dem Inneren des Containers hin öffnet, sowie mit Befestigungsmitteln (23, 39) zu einer lösbaren Schnappzusammenpassung des äußeren Formungsstreifens (18) mit dem inneren Formungsstreifen (24), derart, daß die Kante (22) des äußeren Ecken-Formungsstreifens (18) sich in die erste Nut der Paneele (26) hineinerstreckt, die sich mit ihrer konvexen Seite in die Nut (25) des inneren Formungsstreifens (24) hineinerstreckt, und daß die Lippe (27) des inneren Formungsstreifens (24) sich in die zweite Nut der Paneele (26) hineinerstreckt, die sich mit ihrer konvexen Seite in die Nut (19) des äußeren Ecken-Formungsstreifens (18) hinein erstreckt, um so die Umfangskante der halbsteifen Paneele (26) zwischen dem äußeren Ecken-Formungsstreifen (18) und dem inneren Formungsstreifen (24) festzuklemmen, um eine doppelte Dichtung zu bilden.

3. Ein Fracht-Container gemäß Anspruch 1 oder 2, bei welchem die Befestigungsmittel Randwulste (23) aufweisen, welche einen Bestandteil des äußeren Ecken-Formungsstreifens (18) bilden, sowie Ausnehmungen (39), welche einen Bestandteil des inneren Ecken-Formungsstreifens (24) bilden, wobei die Randwulste (23) und die Ausnehmungen (39) eine miteinander zusammenpassende Schnappverbindung bilden, die eine Kraft liefert, um die inneren und äußeren Ecken-Formungs-Streifen (18, 24) fest miteinander zu halten.

4. Ein Fracht-Container wie in Anspruch 1 beansprucht, **dadurch gekennzeichnet,** daß das Kunststoff-Plattenmaterial der genannten Wandpaneele durchscheinend ist.

5. Ein Fracht-Container wie in einem der vorhergehenden Ansprüche beansprucht, **dadurch gekennzeichnet**, daß das Kunststoff-Plattenmaterial der genannten Wandpaneele aus einem Polycarbonat-Kunststoffmaterial gebildet ist.

6. Ein Fracht-Container, wie in einem der vorhergehenden Ansprüche beansprucht, bei welchem eine Muttern-Haltevorrichtung (38) an dem inneren Formungsstreifen vorgesehen ist und eine Mutter (32) in nicht drehbarer Weise in der Muttern-Haltevorrichtung gehalten ist, und wobei sich mit Gewinde versehene Mittel (34) durch den äußeren Eckenkanal-Streifen und den inneren Formungsstreifen hindurch erstrecken, jedoch nicht durch den Kantenabschnitt der Paneele hindurchdringen, und wobei die genannten mit Gewinde versehenen Mittel (34) in schraubbarer Weise mit der Mutter (32) in Eingriff gelangen.

7. Ein Fracht-Behälter, wie in Anspruch 6 beansprucht, bei welchem die genannten mit Gewinde versehenen Mittel einen Bolzen (34) aufweisen, welcher mit der genannten Mutter (32) in einer solchen Art und Weise zusammenpassend ausgebildet ist, daß der genannte Bolzen sich niemals von der genannten Mutter trennt, wobei die genannte Mutter in Bezug auf den genannten Formungsstreifen so angeordnet ist, daß der genannte Bolzen niemals von den genannten Formungsstreifen außer Eingriff gelangt.

8. Ein Fracht-Container, wie in Anspruch 7 beansprucht, umfassend eine mit Außengewinde versehene Hebeschraube und eine damit zusammenpassende unverlierbare Mutter zum zwangsläufigen Pressen der Schnappverbindung, wobei die Schraube und die Mutter jeweils dem inneren und äußeren Ecken-Formungsstreifen zugeordnet sind.

9. Ein Verfahren zum Herstellen eines Fracht-Containers gemäß einem der vorhergehenden Ansprüche, aufweisend:
Formgebung oder Gestaltung der Kanten der durchscheinenden Polycarbonat-Paneele bis zu wenigstens einer Wellung oder Riffelung durch Vorerhitzung einer jeden Paneelen-Kante und Hindurchleiten der genannten vorerhitzten Kante durch ein oder mehrere Form-Walzwerke, welche so angeordnet sind, daß sie voranschreitend in eine jede Paneelenkante Riffelungen oder Wellungen einformen;
Einführen einer jeden Kante der genannten Paneele zwischen einen inneren Ecken-Formungsstreifen und einen äußeren Ecken-Kanal- oder Profilstreifen, wobei die Kanten-Wellung der Paneele zwischen dem inneren Ecken-Formungsstreifen (18) und dem äußeren Ecken-Kanal oder -Profil-Streifen (20) angeordnet sind und wobei die genannte Wellung oder Riffelung einen Rücken (30) aufweist, der innerhalb einer Nut (25) des inneren Ecken-Formungsstreifens eingesetzt ist und aufgenommen ist;
Anordnen einer sich in Längsrichtung erstreckenden Kante (22) an einem jeden äußeren Ecken-Kanal- oder Profilstreifen in den Rücken (30) des Kantenabschnittes der Wand-Paneele, so daß der äußere Ecken-Kanal- oder Profilstreifen in die Nut (25) des inneren Eckenformungsstreifens eingesetzt und innerhalb dieser Nut aufgenommen ist;
**dadurch gekennzeichnet,**
daß durch Zusammenpressen der inneren und äußeren Ecken-Formungsstreifen (18, 24) Befestigungsmittel (23, 29), welche eine Schnappverbindung ergeben, in Eingriff gelangen, so daß die inneren und äußeren Ecken-Formungsstreifen (18, 24) fest miteinander gehalten werden, und
**gekennzeichnet durch**
Anbringen einer Tür über einer Öffnung, welche ohne eine Seiten-Paneele zwischen Umfangs-Kanten des Containers gelassen worden ist.

## Revendications

1. Conteneur pour marchandises, dont la construction comprend :
des bandes de moulage d'angle, intérieure et extérieure (18, 24) prévues pour s'adapter de manière continue dans le sens de la longueur, délimitant entre elles une combinaison de lèvre et de gorge (19, 25, 22, 27) ininterrompue pour permettre l'encliquetage desdites bandes (18, 24) entre elles, ces bandes (18, 24) présentant des ondulations emboîtables au niveau de leurs bords; et
des panneaux (26) comprenant des ondulations (30) dans leurs côtés, ceux-ci étant adaptés pour s'emboîter avec les ondulations (19, 24, 22, 77) desdites bandes de moulage (18, 24), lesdits panneaux (26), lorsqu'ils sont emboîtés avec les bandes (18, 24) sur tous leurs bords, étant en traction;
caractérisé en ce que des moyens de fixation (23, 39) sont prévus pour encliqueter ensemble les bandes de moulage d'angle intérieure et extérieure (18, 24), en vue d'emprisonner les bords ondulés des panneaux (26) et de libérer sélectivement l'encliquetage pour remplacer des panneaux ou d'autres parties endommagées.

2. Conteneur pour marchandises selon la revendication 1, dans lequel la bande de moulage d'angle extérieure (18) définit un moyen formant gorge (19), s'étendant longitudinalement, s'ouvrant vers l'intérieur en direction de la partie interne du conteneur et comprenant un bord (22) s'étendant longitudinalement; la bande de moulage d'angle intérieure (24) définissant un moyen formant gorge (25) s'étendant longitudinalement, s'ouvrant vers l'extérieur depuis l'intérieur du conteneur et comprenant une lèvre saillante (27) s'étendant longitudinalement, la paroi du conteneur comprenant un panneau semi-rigide perforé (26) continu, dont les bords périphériques sont incurvés pour former un profil en S (30), avec une première ouverture de gorge s'ouvrant vers l'extérieur depuis l'intérieur du conteneur et une seconde ouverture de gorge s'ouvrant vers l'intérieur, en direction de l'intérieur du conteneur et présentant des moyens de fixation (23, 39) pour encliqueter de manière amovible la bande de moulage extérieure (18) sur la bande de moulage intérieure (24), de manière que le bord (22) de la bande de moulage d'angle extérieure (18) se dispose dans la première gorge du panneau (26), laquelle s'étend avec son côté convexe dans la gorge (25) de la bande de moulage intérieure (24), la lèvre (27) de la bande de moulage intérieure (24) se disposant dans la seconde gorge du panneau (26), laquelle s'étend avec son côté convexe dans la gorge (19) de la bande de moulage d'angle extérieure (18), de manière à serrer le bord périphérique du panneau semi-rigide (26) entre la bande de moulage d'angle (18) et la bande de moulage (24), en formant un double joint d'étanchéité.

3. Conteneur pour marchandises selon la revendication 1 ou 2, dans lequel les moyens de fixation comprennent des moulures (23), faisant partie de la bande de moulage d'angle extérieure (18) et des cavités (39) faisant partie de la bande de moulage d'angle intérieure (24), lesdites moulures (23) et cavités (39) formant une liaison encliquetable d'adaptation, fournissant la force nécessaire pour maintenir rigidement les bandes de moulage d'angle (18, 24) ensemble.

4. Conteneur pour marchandises selon la revendication 1, caractérisé en ce que la feuille en matière plastique desdits panneaux de paroi est transparente

5. Conteneur pour marchandises selon l'une quelconque des revendications précédentes, caractérisé en ce que la feuille de matière plastique desdits panneaux de paroi est réalisée à partir d'une matière plastique à base de polycarbonate.

6. Conteneur pour marchandises selon l'une quelconque des revendications précédentes, dans lequel un moyen de maintien (38) est situé sur la bande de moulage intérieure, un écrou (32) étant maintenu de manière non-rotative dans ce moyen de maintien, tandis qu'un organe fileté (34) traverse la bande d'angle extérieure à gorge et la bande de moulage intérieure, mais en ne pénétrant pas dans le bord du panneau, l'organe fileté (34) étant vissé avec l'écrou (32).

7. Conteneur pour marchandises selon la revendication 6, dans lequel l'organe fileté comprend un boulon (34), accouplé à l'écrou (32), de manière que ce boulon ne se sépare jamais de l'écrou, celui-ci étant placé en relation avec ladite bande de moulage de manière que ledit boulon ne se sépare jamais des bandes de moulage.

8. Conteneur pour marchandises selon la revendication 7, comprenant une vis de calage filetée et un écrou d'adaptation captif pour séparer par force la liaison encliquetable, la vis et l'écrou étant respectivement associés avec les bandes de moulage d'angle intérieure et extérieure.

9. Procédé de fabrication d'un Conteneur pour marchandises selon l'une quelconque des revendications précédentes, consistant à :
former à la façon d'au moins une ondulation dans les bords d'un panneau en polycarbonate transparent, en opérant un réchauffage de chaque côté du panneau et faisant passer ledit côté réchauffé par un ou plusieurs laminoirs disposés de manière à former progressivement des ondulations dans chacun de ces côtés;
introduire chaque côté desdits panneaux entre une bande de moulage d'angle intérieure et une bande de moulage d'angle extérieure; avec l'ondulation de côté du panneau disposée entre la bande de moulage d'angle intérieure (18) et la bande de moulage d'angle extérieure (20), ladite ondulation comprenant une nervure (30) insérée dans une gorge (25) de la bande de moulage d'angle intérieure;
placer un bord (22) s'étendant longitudinalement sur chaque bande d'angle extérieure dans la nervure (30) de la partie de côté du panneau de paroi, de manière que la bande d'angle extérieure soit insérée dans une gorge (25) de la bande de moulage d'angle intérieure;
caractérisé par le pressage des bandes de moulage d'angle intérieure et extérieure (18, 24) ensemble, des moyens de fixation (23, 39) provoquant la prise d'une liaison encliquetable, de manière que ces bandes de moulage (18, 24) soient maintenus rigidement ensemble et par
la fixation d'une porte sur une ouverture ne comportant pas de panneau latéral, entre les bords périphériques du conteneur.
